# EUROPEAN PATENT APPLICATION

(11) **EP 4 542 391 A1**
(43) Date of publication of application: **23.04.2025**
(21) Application number: 24206475.6
(22) Date of filing: 14.10.2024
(51) Int. Cl.: G06F 9/50, G06F 9/54

(54) **ASYNCHRONOUS MECHANISM FOR PROCESSING SYNCHRONOUS OPERATION FLOWS**

(30) Priority: 20.10.2023 US 202318382354
(71) Applicant: VMware LLC, Palo Alto, CA 94304 (US)
(72) Inventor: Dinkov, Kostadin, 1766 Sofia (BG); Todorov, Atanas, 1766 Sofia (BG); Dzhigarov, Marin, 1766 Sofia (BG); Angelov, Boris, 1766 Sofia (BG); Raikov, Ventsyslav, 1766 Sofia (BG)
(74) Representative: Dilg, Haeusler, Schindelmann Patentanwaltsgesellschaft mbH

(57) **Abstract**

An asynchronous mechanism for processing synchronous operation flows is described herein. One example method includes receiving a request from an orchestrator engine to determine a state of a cloud resource of a cloud automation platform, propagating the request to the cloud automation platform, caching a task identifier received from the cloud automation platform responsive to the request, receiving data indicative of the state of the cloud resource from the cloud automation platform wherein the data is associated with the task identifier, and providing the data to the orchestrator engine.

## Description

### BACKGROUND

A data center is a facility that houses servers, data storage devices, and/or other associated components such as backup power supplies, redundant data communications connections, environmental controls such as air conditioning and/or fire suppression, and/or various security systems. A data center may be maintained by an information technology (IT) service provider. An enterprise may utilize data storage and/or data processing services from the provider in order to run applications that handle the enterprises' core business and operational data. The applications may be proprietary and used exclusively by the enterprise or made available through a network for anyone to access and use.

Virtual computing instances (VCIs), such as virtual machines and containers, have been introduced to lower data center capital investment in facilities and operational expenses and reduce energy consumption. A VCI is a software implementation of a computer that executes application software analogously to a physical computer. VCIs have the advantage of not being bound to physical resources, which allows VCIs to be moved around and scaled to meet changing demands of an enterprise without affecting the use of the enterprise's applications. In a software-defined data center, storage resources may be allocated to VCIs in various ways, such as through network attached storage (NAS), a storage area network (SAN) such as fiber channel and/or Internet small computer system interface (iSCSI), a virtual SAN, and/or raw device mappings, among others.

### BRIEF DESCRIPTION OF THE DRAWINGS

Figure 1 is a diagram of a host and a system for an asynchronous mechanism for processing synchronous operation flows according to one or more embodiments of the present disclosure.
Figure 2 a flow chart associated with an asynchronous mechanism for processing synchronous operation flows according to one or more embodiments of the present disclosure.
Figure 3 illustrates a system for an asynchronous mechanism for processing synchronous operation flows according to one or more embodiments of the present disclosure.
Figure 4 is a diagram of a machine for an asynchronous mechanism for processing synchronous operation flows according to one or more embodiments of the present disclosure.

### DETAILED DESCRIPTION

As referred to herein, a virtual computing instance (VCI) covers a range of computing functionality. VCIs may include non-virtualized physical hosts, virtual machines (VMs), and/or containers. A VM refers generally to an isolated end user space instance, which can be executed within a virtualized environment. Other technologies aside from hardware virtualization that can provide isolated end user space instances may also be referred to as VCIs. The term "VCI" covers these examples and combinations of different types of VCIs, among others. VMs, in some embodiments, operate with their own guest operating systems on a host using resources of the host virtualized by virtualization software (e.g., a hypervisor, virtual machine monitor, etc.).

Multiple VCIs can be configured to be in communication with each other in an SDDC. In such a system, information can be propagated from a client (e.g., an end user) to at least one of the VCIs in the system, between VCIs in the system, and/or between at least one of the VCIs in the system and a server. SDDCs are dynamic in nature. For example, VCIs and/or various application services, may be created, used, moved, or destroyed within the SDDC. When VCIs are created, various processes and/or services start running and consuming resources. As used herein, "resources" are physical or virtual components that have a finite availability within a computer or SDDC. For example, resources include processing resources, memory resources, electrical power, and/or input/output resources.

While the specification refers generally to VCIs, the examples given could be any type of data compute node, including physical hosts, VCIs, non-VCI containers, and hypervisor kernel network interface modules. Embodiments of the present disclosure can include combinations of different types of data compute nodes.

A development platform can be used to configure and/or provision resources in a virtualized environment. One example of such a development platform is VMware's vRealize Aria Automation (sometimes referred to herein as "vRA"). vRA is a cloud management layer that sits on top of one or more clouds (e.g., different clouds). It can provision complex deployments and offer governance and management of these workloads and the resources in the cloud. A development platform in accordance with the present disclosure can be designed to automate multiple clouds with secure, self-service provisioning.

A cloud automation platform (e.g., Idem, Terraform, etc.) can be stateless and can run any number of management tasks on any cloud at any time, scanning and discovering current cloud deployments and generating the raw data required to manage them. A cloud automation platform is not limited to cloud hyperscalers. It can describe and manage anything with an API (e.g. GitHub). The particular example of Idem is described herein, though it is noted that embodiments of the present disclosure are not so limited.

In vRA, there is a micro service that serves the role of an orchestration engine and its purpose is to orchestrate the provisioning flow of various resource types to different hyperscalers, for instance. Stated simply, this orchestration engine integrates with other micro-services that do the actual job of create, read status or update resources on the cloud. One issue is that the orchestrator engine establishes a synchronous communication channel and expects synchronous response to operations such as READ (e.g., get actual state of the resource from the Cloud).

With the integration of Idem as resource provider and idem-service as an API gateway, this contract is broken as idem-service does not return synchronous response on read but rather acts asynchronously by sending an event on completion. Blocking the thread while Idem service completes would be an issue for scaling. In the event of a large number of requests, it is possible that all connectivity threads will be waiting and no more requests would be processed. Also using any non-blocking paradigm would not be straightforward as the environment setup is a multi-instance setup. Each service is replicated on a plurality of (e.g., 3) kubernetes nodes. There is no guarantee that the READ request from the orchestrator engine and the event from idem service when the operation completes will end up in one and the same kubernetes node.

Embodiments of the present disclosure address this issue by implementing a middle-man service between the orchestrator engine and Idem service referred to herein as "idem-resources-provider." One of its goals is to delay the response without blocking the request thread. Embodiments herein implement a new API endpoint that receives the request from the orchestrator engine, propagates it to the idem-service and returns a deferred result "DeferredResult" that will receive the result once an operation completes which will happen in the future. In this way the thread is free to serve other tasks while waiting for the asynchronous operation to complete. Once the operation completes, the DeferredResult is filled in with the actual data and a response returned to the orchestrator engine.

To fill in the DeferredResult, embodiments herein listen for Idem-service events. This can be done by polling using an eventbroker service. In a 3-node kubernetes setup there are 3 instances of each service. Usually, only one instance receives the event. However, in 90% of the cases the instance where the READ task is triggered is not the same instance where the event is received. Accordingly, embodiments herein include a broadcast subscription only for the events received for READ tasks. This can be done by using subscription criteria. With that subscription the idem-service events for READ operation will be received by all 3 instances.

Because there might be hundreds or even thousands of parallel READ requests, embodiments herein can cache the DeferredResult for each operation and utilize a mechanism to map to a concrete idem-service event. Accordingly, the DeferredResults can be stored in an in-memory cache with key = <Task ID>. The TASK ID is unique and it can be contained in the payload of the event. So once the event is received, the DeferredResult which is to be completed is known.

The event can be broadcasted to all three instances but only one has a corresponding entry in the cache for the concrete <Task ID>. That instance can process the event and complete the DeferredResult. The other instances which receive the event that do not have any entry in the cache will ignore the event. To mitigate any potential issues with lost events, embodiments herein implement a request timeout and cache "time-to-live," so entries are regularly cleaned up.

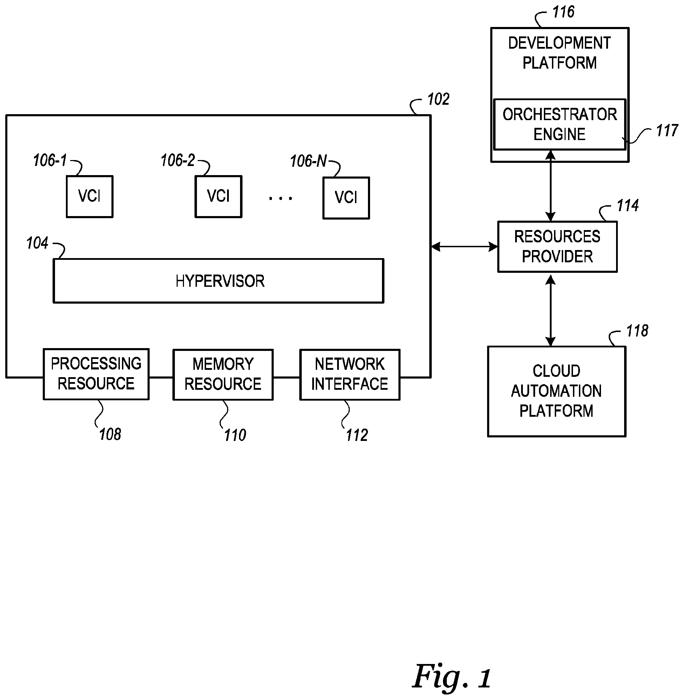

Figure 1 is a diagram of a host and a system for an asynchronous mechanism for processing synchronous operation flows according to one or more embodiments of the present disclosure. The host 102 can be provisioned with processing resource(s) 108 (e.g., one or more processors), memory resource(s) 110 (e.g., one or more main memory devices and/or storage memory devices), and/or a network interface 112. The host 102 can be included in a software defined data center. A software defined data center can extend virtualization concepts such as abstraction, pooling, and automation to data center resources and services to provide information technology as a service (ITaaS). In a software defined data center, infrastructure, such as networking, processing, and security, can be virtualized and delivered as a service. A software defined data center can include software defined networking and/or software defined storage. In some embodiments, components of a software defined data center can be provisioned, operated, and/or managed through an application programming interface (API).

The host 102 can incorporate a hypervisor 104 that can execute a number of VCIs 106-1, 106-2,..., 106-N (referred to generally herein as "VCIs 106"). The VCIs can be provisioned with processing resources 108 and/or memory resources 110 and can communicate via the network interface 112. The processing resources 108 and the memory resources 110 provisioned to the VCIs 106 can be local and/or remote to the host 102 (e.g., the VCIs 106 can be ultimately executed by hardware that may not be physically tied to the VCIs 106). For example, in a software defined data center, the VCIs 106 can be provisioned with resources that are generally available to the software defined data center and are not tied to any particular hardware device. By way of example, the memory resources 110 can include volatile and/or non-volatile memory available to the VCIs 106. The VCIs 106 can be moved to different hosts (not specifically illustrated), such that a different hypervisor manages the VCIs 106. In some embodiments, the host 102 can be connected to (e.g., in communication with) a resources provider 114. The resources provider can be in communication with a development platform 216 (e.g., an orchestration engine 217 of the development platform 216) and a cloud automation platform 218.

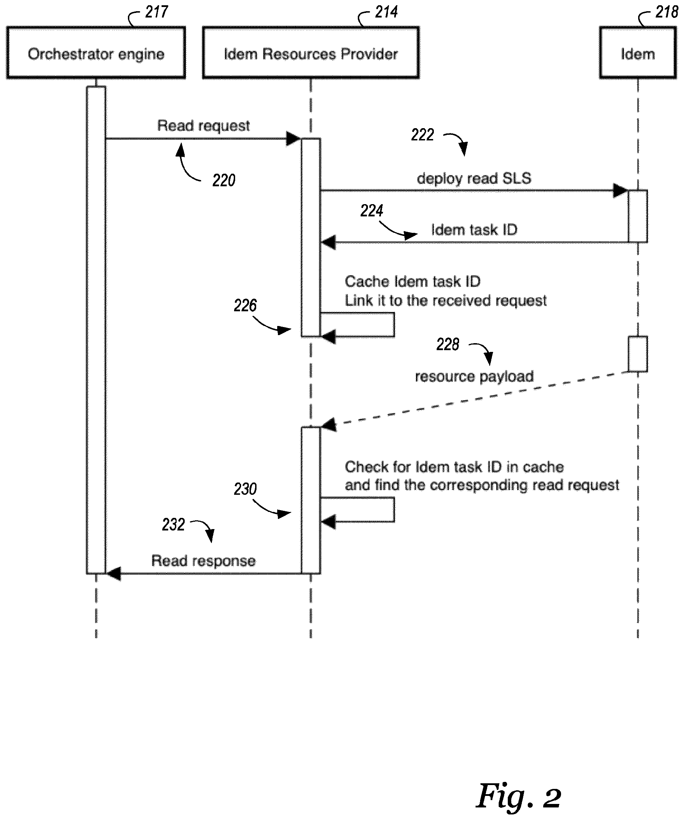

Figure 2 a flow chart associated with an asynchronous mechanism for processing synchronous operation flows according to one or more embodiments of the present disclosure. The flow chart illustrated in Figure 2 includes orchestrator engine 217, Idem resource provider 214 and Idem 218. The orchestrator engine 217 can communicate a read request to Idem resources provider 214. The Idem resources provider 214 can propagate the request by deploying a structured layer state (SLS) file to the Idem 218 at 222. Idem 218 can return an Idem task ID at 224 to the resources provider 214. The resources provider 214 can cache the Idem task ID and link the Idem task ID to the received request at 226. A resource payload is later received at 228. The resources provider 214 checks for the Idem task ID in the cache and finds the corresponding read request at 230. The response to the read request is then sent to the orchestrator engine 217 at 232.

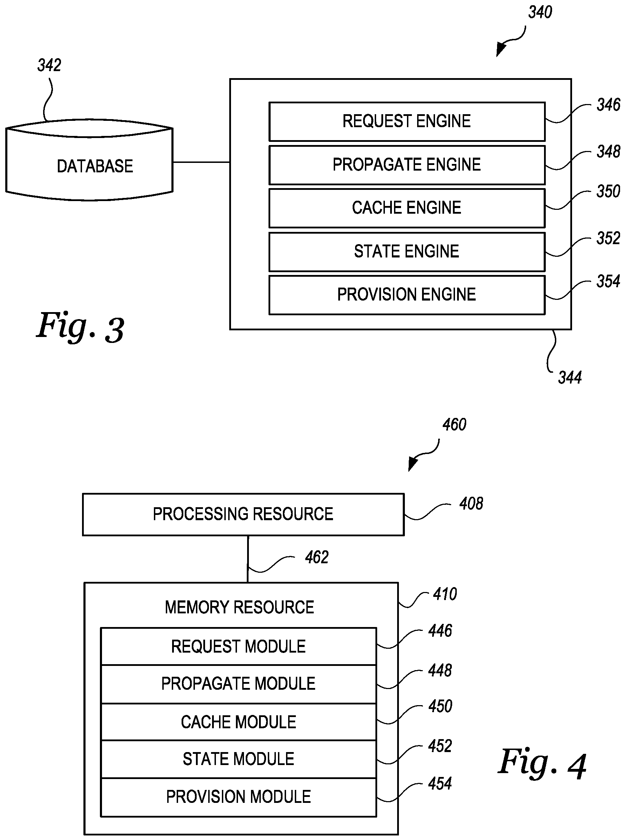

Figure 3 illustrates a system 340 for an asynchronous mechanism for processing synchronous operation flows according to one or more embodiments of the present disclosure. The system 340 can include a database 342, a subsystem 344, and/or a number of engines, for example request engine 346, propagate engine 348, cache engine 350, state engine 352, and/or provision engine 354, and can be in communication with the database 342 via a communication link. The system 340 can include additional or fewer engines than illustrated to perform the various functions described herein. The system can represent program instructions and/or hardware of a machine (e.g., machine 460 as referenced in Figure 4, etc.). As used herein, an "engine" can include program instructions and/or hardware, but at least includes hardware. Hardware is a physical component of a machine that enables it to perform a function. Examples of hardware can include a processing resource, a memory resource, a logic gate, etc.

The number of engines can include a combination of hardware and program instructions that is configured to perform a number of functions described herein. The program instructions (e.g., software, firmware, etc.) can be stored in a memory resource (e.g., machine-readable medium) as well as hard-wired program (e.g., logic). Hard-wired program instructions (e.g., logic) can be considered as both program instructions and hardware.

In some embodiments, the request engine 346 can include a combination of hardware and program instructions that is configured to receive a request from an orchestrator engine to determine a state of a cloud resource of a cloud automation platform. In some embodiments, the propagate engine 348 can include a combination of hardware and program instructions that is configured to propagate the request to the cloud automation platform. In some embodiments, the cache engine 350 can include a combination of hardware and program instructions that is configured to cache a task identifier received from the cloud automation platform responsive to the request. In some embodiments, the state engine 352 can include a combination of hardware and program instructions that is configured to receive data indicative of the state of the cloud resource from the cloud automation platform wherein the data is associated with the task identifier. In some embodiments, the provision engine 354 can include a combination of hardware and program instructions that is configured to provide the data to the orchestrator engine.

Figure 4 is a diagram of a machine 460 for an asynchronous mechanism for processing synchronous operation flows according to one or more embodiments of the present disclosure. The machine 460 can utilize software, hardware, firmware, and/or logic to perform a number of functions. The machine 460 can be a combination of hardware and program instructions configured to perform a number of functions (e.g., actions). The hardware, for example, can include a number of processing resources 408 and a number of memory resources 410, such as a machine-readable medium (MRM) or other memory resources 410. The memory resources 410 can be internal and/or external to the machine 460 (e.g., the machine 460 can include internal memory resources and have access to external memory resources). In some embodiments, the machine 460 can be a virtual computing instance (VCI) or other computing device. The term "VCI" covers a range of computing functionality. The term "virtual machine" (VM) refers generally to an isolated user space instance, which can be executed within a virtualized environment. Other technologies aside from hardware virtualization can provide isolated user space instances, also referred to as data compute nodes. Data compute nodes may include non-virtualized physical hosts, VMs, containers that run on top of a host operating system without a hypervisor or separate operating system, and/or hypervisor kernel network interface modules, among others. Hypervisor kernel network interface modules are non-VM data compute nodes that include a network stack with a hypervisor kernel network interface and receive/transmit threads. The term "VCI" covers these examples and combinations of different types of data compute nodes, among others.

The program instructions (e.g., machine-readable instructions (MRI)) can include instructions stored on the MRM to implement a particular function (e.g., an action such as propagating a request). The set of MRI can be executable by one or more of the processing resources 408. The memory resources 410 can be coupled to the machine 460 in a wired and/or wireless manner. For example, the memory resources 410 can be an internal memory, a portable memory, a portable disk, and/or a memory associated with another resource, e.g., enabling MRI to be transferred and/or executed across a network such as the Internet. As used herein, a "module" can include program instructions and/or hardware, but at least includes program instructions.

Memory resources 410 can be non-transitory and can include volatile and/or non-volatile memory. Volatile memory can include memory that depends upon power to store information, such as various types of dynamic random access memory (DRAM) among others. Non-volatile memory can include memory that does not depend upon power to store information. Examples of non-volatile memory can include solid state media such as flash memory, electrically erasable programmable read-only memory (EEPROM), phase change random access memory (PCRAM), magnetic memory, optical memory, and/or a solid state drive (SSD), etc., as well as other types of machine-readable media.

The processing resources 408 can be coupled to the memory resources 410 via a communication path 462. The communication path 462 can be local or remote to the machine 460. Examples of a local communication path 462 can include an electronic bus internal to a machine, where the memory resources 410 are in communication with the processing resources 408 via the electronic bus. Examples of such electronic buses can include Industry Standard Architecture (ISA), Peripheral Component Interconnect (PCI), Advanced Technology Attachment (ATA), Small Computer System Interface (SCSI), Universal Serial Bus (USB), among other types of electronic buses and variants thereof. The communication path 462 can be such that the memory resources 410 are remote from the processing resources 408, such as in a network connection between the memory resources 410 and the processing resources 408. That is, the communication path 462 can be a network connection. Examples of such a network connection can include a local area network (LAN), wide area network (WAN), personal area network (PAN), and the Internet, among others.

As shown in Figure 4, the MRI stored in the memory resources 410 can be segmented into a number of modules 446, 448, 450, 452, 454 that when executed by the processing resources 408 can perform a number of functions. As used herein a module includes a set of instructions included to perform a particular task or action. The number of modules 446, 448, 450, 452, 454 can be sub-modules of other modules. For example, the propagate module 448 can be a sub-module of the request module 446 and/or can be contained within a single module. Furthermore, the number of modules 446, 448, 450, 452, 454 can comprise individual modules separate and distinct from one another. Examples are not limited to the specific modules 446, 448, 450, 452, 454 illustrated in Figure 4.

One or more of the number of modules 446, 448, 450, 452, 454 can include program instructions and/or a combination of hardware and program instructions that, when executed by a processing resource 408, can function as a corresponding engine as described with respect to Figure 3. For example, the cache module 450 can include program instructions and/or a combination of hardware and program instructions that, when executed by a processing resource 408, can function as the cache engine 350.

For example, the machine 460 can include a request module 446, which can include instructions to receive a request from an orchestrator engine to determine a state of a cloud resource of a cloud automation platform. For example, the machine 460 can include a propagate module 448, which can include instructions to propagate the request to the cloud automation platform. For example, the machine 460 can include a cache module 450, which can include instructions to cache a task identifier received from the cloud automation platform responsive to the request. For example, the machine 460 can include a state module 452, which can include instructions to receive data indicative of the state of the cloud resource from the cloud automation platform wherein the data is associated with the task identifier. For example, the machine 460 can include a provision module 454, which can include instructions to provide the data to the orchestrator engine.

The present disclosure is not limited to particular devices or methods, which may vary. The terminology used herein is for the purpose of describing particular embodiments, and is not intended to be limiting. As used herein, the singular forms "a", "an", and "the" include singular and plural referents unless the content clearly dictates otherwise. Furthermore, the words "can" and "may" are used throughout this application in a permissive sense (i.e., having the potential to, being able to), not in a mandatory sense (i.e., must). The term "include," and derivations thereof, mean "including, but not limited to."

The figures herein follow a numbering convention in which the first digit or digits correspond to the drawing figure number and the remaining digits identify an element or component in the drawing. Similar elements or components between different figures may be identified by the use of similar digits. For example, 108 may reference element "08" in Figure 1, and a similar element may be referenced as 408 in Figure 4. A group or plurality of similar elements or components may generally be referred to herein with a single element number. For example, a plurality of reference elements 104-1, 104-2, ..., 104-N may be referred to generally as 104. As will be appreciated, elements shown in the various embodiments herein can be added, exchanged, and/or eliminated so as to provide a number of additional embodiments of the present disclosure. In addition, as will be appreciated, the proportion and the relative scale of the elements provided in the figures are intended to illustrate certain embodiments of the present invention, and should not be taken in a limiting sense.

Although specific embodiments have been described above, these embodiments are not intended to limit the scope of the present disclosure, even where only a single embodiment is described with respect to a particular feature. Examples of features provided in the disclosure are intended to be illustrative rather than restrictive unless stated otherwise. The above description is intended to cover such alternatives, modifications, and equivalents as would be apparent to a person skilled in the art having the benefit of this disclosure.

The scope of the present disclosure includes any feature or combination of features disclosed herein (either explicitly or implicitly), or any generalization thereof, whether or not it mitigates any or all of the problems addressed herein. Various advantages of the present disclosure have been described herein, but embodiments may provide some, all, or none of such advantages, or may provide other advantages.

In the foregoing Detailed Description, some features are grouped together in a single embodiment for the purpose of streamlining the disclosure. This method of disclosure is not to be interpreted as reflecting an intention that the disclosed embodiments of the present disclosure have to use more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment.

## Claims

1. A method, comprising:
receiving a request from an orchestrator engine to determine a state of a cloud resource of a cloud automation platform;
propagating the request to the cloud automation platform;
caching a task identifier received from the cloud automation platform responsive to the request;
receiving data indicative of the state of the cloud resource from the cloud automation platform wherein the data is associated with the task identifier; and
providing the data to the orchestrator engine.

2. The method of claim 1, wherein the orchestrator engine is configured to
communicate synchronously and wherein the cloud automation platform is configured to communicate asynchronously.

3. The method of claim 1 or 2, wherein the method includes
receiving the data indicative of the state of the cloud resource responsive to a completion of an operation by the cloud automation platform.

4. The method of any one of the claims 1 to 3, wherein the method includes
broadcasting an event to each of a plurality of instances of a service.

5. The method of claim 4, wherein the method includes
processing the event by one of the plurality of instances to associate the data with the task identifier.

6. The method of claim 5, wherein the method includes
ignoring the event by others of the plurality of instances.

7. The method of any one of the claims 1 to 6, wherein
the cloud automation platform is Idem.

8. A non-transitory machine-readable medium having instructions stored thereon which, when executed by a processing resource, cause the processing resource to control and/or carry out a method as set forth in any one of the preceding method claims.

9. A system, comprising:
a request engine configured to receive a request from an orchestrator engine to determine a state of a cloud resource of a cloud automation platform;
a propagate engine configured to propagate the request to the cloud automation platform;
a cache engine configured to cache a task identifier received from the cloud automation platform responsive to the request;
a state engine configured to receive data indicative of the state of the cloud resource from the cloud automation platform wherein the data is associated with the task identifier; and
a provision engine configured to provide the data to the orchestrator engine.

10. The system of claim 9, wherein the orchestrator engine is configured to
communicate synchronously and wherein the cloud automation platform is configured to communicate asynchronously.

11. The system of claim 9 or 10, wherein the state engine is configured to
receive the data indicative of the state of the cloud resource responsive to a completion of an operation by the cloud automation platform.

12. The system of any one of the claims 9 to 11, wherein the propagate engine is configured to broadcast an event to each of a plurality of instances of a service.

13. The system of claim 12, wherein the state engine is configured to
process the event by one of the plurality of instances to associate the data with the task identifier.

14. The system of claim 13, wherein the state engine is configured to
ignore the event by others of the plurality of instances.
